(19) Europäisches Patentamt
European Patent Office
Office européen des brevets

(11) **EP 1 271 183 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(51) Int Cl.:
***G01V 8/20*** *(2006.01)*

(21) Anmeldenummer: **02011871.7**

(22) Anmeldetag: **28.05.2002**

(54) **Optoelektronischer Sensor**

Optoelectronic sensor

Capteur optoélectronique

(84) Benannte Vertragsstaaten:
**AT BE CH CY DE DK ES FI FR GB GR IE IT LI LU MC NL PT SE TR**

(30) Priorität: **29.06.2001 DE 10131685**

(43) Veröffentlichungstag der Anmeldung:
**02.01.2003 Patentblatt 2003/01**

(73) Patentinhaber: **SICK AG**
**79183 Waldkirch,**
**Breisgau (DE)**

(72) Erfinder:
• **Waslowski, Kai**
**79312 Emmendingen (DE)**

• **Merettig, Gerhard**
**79350 Sexau (DE)**
• **Ringwald, Siegfried**
**79215 Elzach (DE)**

(74) Vertreter: **Manitz, Finsterwald & Partner GbR**
**Postfach 31 02 20**
**80102 München (DE)**

(56) Entgegenhaltungen:
**DE-A- 19 808 215          DE-A- 19 852 173**
**DE-A- 19 907 547          DE-A- 19 951 557**
**JP-A- 56 103 310**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen optoelektronischen Sensor, insbesondere Reflexionslichttaster, zumindest mit einem Sender zum Aussenden von Sendelicht, einem Empfänger zur Ausgabe von wenigstens zwei Empfangssignalen in Abhängigkeit von reflektiertem und empfangenem Sendelicht, und einer Auswerteeinrichtung, durch die zur Feststellung, ob sich ein Objekt oder kein Objekt in einem Erfassungsbereich des Sensors befindet, eine Differenz der Empfangssignale mit einem Schwellenwert vergleichbar ist und in Abhängigkeit von dem Ergebnis dieses Vergleichs ein positives oder negatives Gegenstandsfeststellungssignal erzeugbar ist, wobei zur Erzeugung einer Schalthysterese mehrere verschiedene Schwellenwerte vorgesehen sind, gemäß dem Oberbegriff des Anspruchs 1. Die Erfindung betrifft ferner ein entsprechendes Verfahren.

Derartige Sensoren sollen detektieren, ob und wann ein Objekt in den Erfassungsbereich gelangt bzw. diesen verläßt, wohingegen Objekte in anderen Raumbereichen ignoriert werden sollen. Beispielsweise kann es sich, im Falle der sogenannten Hintergrundausblendung, bei dem Erfassungsbereich um einen Vordergrundbereich handeln; falls ein Objekt aus dem Vordergrundbereich in den Hintergrundbereich wechselt, soll der Sensor von einem positiven zu einem negativen Gegenstandsfeststellungssignal umschalten.

Üblicherweise arbeiten derartige Sensoren nach dem Triangulationsprinzip: Eine Änderung des Abstands eines reflektierenden Objekts (Tastabstand) führt zu einer Verschiebung des entsprechenden Lichtflecks auf dem Empfänger und einer entsprechenden Änderung der Ausgangssignale des Empfängers bzw. des Differenzsignales einer nachgeschalteten Differenzschaltung. Falls dieses Differenzsignal infolge einer derartigen Änderung einen Differenzschwellenwert über- oder unterschreitet, schaltet die Auswerteeinheit auf ein positives bzw. negatives Gegenstandsfeststellungssignal um. Der Schwellenwert entspricht somit einem bestimmten Schaltabstand.

Um bei Objekten, die sich im Schaltabstand befinden oder bewegen, ein unerwünschtes mehrmaliges Umschalten zwischen dem positiven und dem negativen Gegenstandsfeststellungssignal zu vermeiden, kann eine Schalthysterese vorgesehen sein: Sobald der Sensor von dem positiven auf das negative Gegenstandsfeststellungssignal - oder umgekehrt - umschaltet, wird auch der dem weiteren Vergleich des Differenzsignals zugrundegelegte Schwellenwert geändert, und zwar so, daß das Differenzsignal nun eine hinreichend deutliche Änderung in der Gegenrichtung vollziehen muß, um erneut einen Wechsel des Gegenstandsfeststellungssignals herbeizuführen.

Bei dem bekannten Sensor und Detektionsverfahren kann sich für manche Anwendungen folgendes Problem ergeben: Um eine eindeutige Detektion von Objekten mit unregelmäßiger, spiegelnder Oberfläche zu gewährleisten, kann zwar die Schalthysterese bzw. - bezogen auf den Tastabstand - die Weghysterese vergrößert werden. Da jedoch Objekte mit unterschiedlichem Reflexionsvermögen bei jeweils gleichem Tastabstand zu unterschiedlichen Differenzsignalen führen können, ist in einem solchen Fall die eingestellte Weghysterese abhängig von dem Reflexionsvermögen des betreffenden Objekts. Dies führt beispielsweise dazu, daß schwarze Objekte eine größere Weghysterese aufweisen als weiße Objekte. Derartig unterschiedliche Schaltabstände sind jedoch oft unerwünscht.

Aus der DE 198 52 173 A1 ist ein Lichttaster mit einem Nahelement und einem Fernelement bekannt, deren Ausgangssignale einen Addierer und einen Subtrahierer zugeführt werden. Die hierin gebildeten Summen- und Differenzsignale werden mit abgespeicherten Schwellwerten verglichen.

Die DE 199 51 557 A1 beschreibt eine optoelektronische Vorrichtung mit einem Nahelement und einem Fernelement. Während eines Einlernvorgangs sind die Differenz und/oder die Summe der Empfangssignale auf Referenzwerte einstellbar. Nach Beendigung des Einlernvorgangs wird bei Abweichen der aktuellen Differenzen und/oder Summen der Empfangssignale von den jeweiligen Referenzwerten eine Objektmeldung generiert.

Aus der DE 200 03 675 U 1 ist eine optoelektronische Vorrichtung zur Erkennung von transparenten Objekten bekannt. Die Vorrichtung besitzt mindestens einen Sender und zwei Empfänger, welchen jeweils ein Polarisationsfilter vorgeordnet ist.

Es ist eine Aufgabe der Erfindung, für einen Sensor bzw. ein Verfahren der erläuterten Art den Schaltaufbau des Sensors zu vereinfachen.

Diese Aufgabe wird durch einen Sensor mit den Merkmalen des Anspruchs 1 gelöst.

Für ein entsprechendes Detektionsverfahren wird die Aufgabe durch die Merkmale des Anspruchs 17 gelöst.

Somit wird für das Umschalten zwischen dem positiven und dem negativen Gegenstandsfeststellungssignal zusätzlich zu der üblichen Berücksichtigung eines Differenzsignals eine weitere Bedingung berücksichtigt: Auch die Summe der Empfangssignale wird ermittelt und mittels einer Vergleichseinrichtung mit einem oder mehreren Schwellenwerten (Summenschwellenwerten) verglichen.

Dem liegt die Erkenntnis zugrunde, daß die jeweilige Weghysterese für Objekte mit unterschiedlichem Reflexionsvermögen sich am geringsten unterscheidet, falls die Differenzschwellenwerte dem Abstand entsprechen, für den beide Empfangssignale gleich groß sind, also für den die Differenz der Empfangssignale Null ist. Gerade eine derartige Wahl der Differenzschwellenwerte kann bei den bekannten Sensoren jedoch nicht verwirklicht werden, da bei einem Differenzschwellenwert, der innerhalb des RMS-Wertes (Root Mean Square) des Rauschens des Differenzsignals oder sogar unterhalb des Wertes Null liegt, nicht mehr gewährleistet ist, daß ein negatives Gegenstandsfeststellungssignal erzeugt wird, wenn der Sensor kein Objekt sieht (sogenannter Blick ins Leere).

Diese mögliche Fehlerquelle wird durch den zusätzlichen Vergleich des Summensignals mit einem Summenschwellenwert vermieden. Durch den Summenvergleich werden Fehldetektionen, die bei Einstellung der Differenzschwellenwerte nahe des Wertes Null auftreten können, verhindert. Somit können die Differenzschwellenwerte frei gewählt werden, um die Variation der Weghysterese verringern zu können.

Je nach Anwendungsfall kann es ausreichend sein, wenn ein Summenvergleich für lediglich eine Schaltrichtung durchgeführt wird, also entweder nur für ein Umschalten vom negativen auf das positive Gegenstandsfeststellungssignal (Einschalten) oder nur in der Gegenrichtung (Ausschalten).

Als Differenzsignal oder Summensignal ist im Zusammenhang mit der Erfindung das Ausgangssignal einer die wenigstens zwei Empfangssignale verarbeitenden Differenzschaltung bzw. Summenschaltung, oder das Eingangssignal einer nachgeschalteten Vergleichseinrichtung zu verstehen.

Zu der Erfindung ist noch anzumerken, daß für das Sende- und das Empfangslicht auch der Infrarot- oder der Ultraviolett-Bereich geeignet sind. Selbstverständlich kann anstelle einer Reflexion des Sendelichts auch eine Remission durch das zu erfassende Objekt erfolgen. Außerdem ist es durch Setzen entsprechender Schwellenwerte auch möglich, mehrere Vordergrundbereiche und/oder Hintergrundbereiche vorzusehen.

Hinsichtlich der Schalthysterese ist es bevorzugt, wenn sowohl für den Differenzvergleich als auch für den Summenvergleich jeweils zwei Schwellenwerte ausgewählt und - je nach Schaltrichtung - berücksichtigt werden. Die Erfindung läßt sich jedoch auch realisieren, wenn lediglich für den Differenzvergleich oder für den Summenvergleich eine Schalthysterese vorgesehen ist.

Hinsichtlich der konkreten Auswahl des Differenzschwellenwerts ist es bevorzugt, wenn dieser Null oder im wesentlichen Null beträgt oder nahe des Wertes Null liegt.

Falls für den Differenzvergleich eine Schalthysterese vorgesehen ist, ist es ferner bevorzugt, wenn die beiden vorgesehenen Differenzschwellenwerte unterschiedliche Vorzeichen besitzen und/oder im wesentlichen symmetrisch um den Wert Null angeordnet sind. In dem letztgenannten Fall ergibt sich ein besonders geringer Unterschied der jeweiligen Weghysterese für Objekte unterschiedlichen Reflexionsvermögens.

In dem genannten Fall, daß sowohl für den Differenzvergleich als auch für den Summenvergleich eine Schalthysterese vorgesehen ist, entspricht vorzugsweise ein oberer Differenzschwellenwert einem unteren Summenschwellenwert. Somit müssen nämlich lediglich insgesamt drei unterschiedliche Schwellenwerte ausgewählt bzw. bestimmt werden, wobei für die beiden erstgenannten Schwellenwerte das Empfängerrauschen in gleicher Weise berücksichtigt werden kann. Alternativ hierzu ist es - zugunsten einer besonders vielseitigen Anpassung an den konkreten Anwendungsfall - auch möglich, jeden Differenzschwellenwert und jeden Summenschwellenwert unterschiedlich festzulegen.

Soweit im Zusammenhang mit der Erfindung von "oberen" bzw. "unteren" Schwellenwerten die Rede ist, bezieht sich dies - unabhängig vom Vorzeichen des Schwellenwerts - jeweils auf den Relativabstand des Betrages des Schwellenwerts vom Wert Null.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:

Fig. 1 und 5     Differenzsignale in Abhängigkeit vom Tastabstand für Objekte unterschiedlichen Reflexionsvermögens,

Fig. 2 und 3     ein Differenz- und ein Summensignal in Abhängigkeit vom Tastabstand für unterschiedliche Schwellenwerte, und

Fig. 4          ein Blockschaltbild des erfindungsgemäßen Sensors.

Fig. 5 illustriert die Problematik der unterschiedlichen Weghysterese für Objekte unterschiedlichen Reflexionsvermögens. Angetragen ist das Differenzsignal $V_{diff}$ über dem Tastabstand D, und zwar für ein schwarzes Objekt S und ein weißes Objekt W. Das Differenzsignal $V_{diff}$ besitzt aufgrund des unterschiedlichen Reflexionsvermögens der beiden Objekte W, S für verschiedene Tastabstände D unterschiedliche Werte und auch unterschiedliche Steigungen. Lediglich an dem jeweiligen Nulldurchgang schneiden sich die beiden Signalverläufe.

Für das Beispiel eines Vordergrund-Reflexionslichttasters, also einer Hintergrundausblendung, sind ein unterer und ein oberer Differenzschwellenwert $V_0'$ bzw. $V_1'$ gezeigt. Falls sich ein Objekt dem Sensor hinreichend nähert und dementsprechend das jeweilige Differenzsignal $V_{diff}$ den oberen Differenzschwellenwert $V_1'$ überschreitet, wird ein positives Gegenstandsfeststellungssignal erzeugt (Einschaltpunkte ES bzw. EW). Erst wenn nachfolgend das jeweilige Differenzsignal $V_{diff}$ den unteren Differenzschwellenwert $V_0'$ wieder unterschreitet, erfolgt ein Umschalten auf ein negatives Gegenstandsfeststellungssignal (Ausschaltpunkte AS bzw. AW).

Diese Schalthysterese, also der Unterschied zwischen den Schwellenwerten $V_1'$ und $V_0'$, wird somit in eine jeweilige Weghysterese HS bzw. HW umgesetzt. Aufgrund des unterschiedlichen Verlaufs des Differenzsignals $V_{diff}$ für das schwarze und das weiße Objekt S bzw. W sind die entsprechenden Weghysteresen HS bzw. HW nicht nur unterschiedlich lang, sondern sie verlaufen auch - getrennt voneinander - entlang unterschiedlicher Tastabstände D. Dies hat für den Sensor die unerwünschte Auswirkung, daß das Umschalten zwischen dem negativen und dem positiven Gegenstandsfeststellungssignal - und somit das Erkennen des Vorhandenseins bzw. Nichtvorhandenseins eines Objekts - für das schwarze Objekt S und das weiße Objekt W zu völlig unterschiedlichen Tastabständen erfolgt.

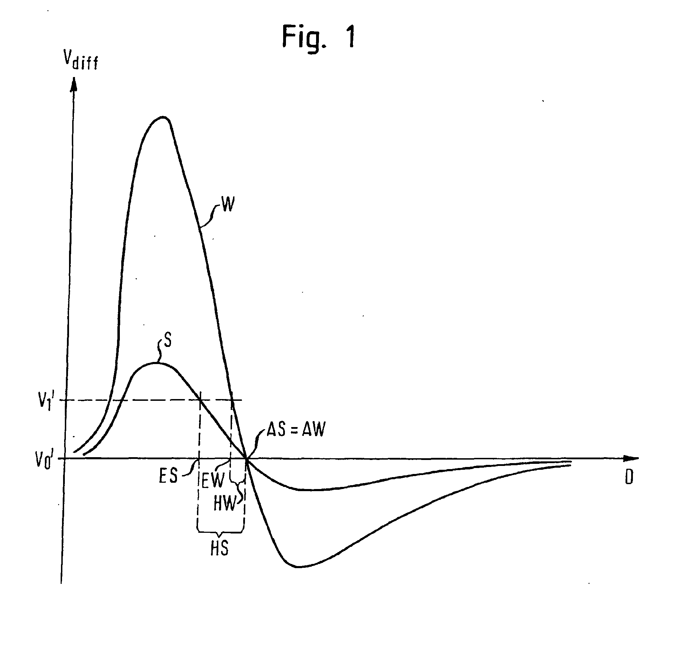

Fig. 1 zeigt demgegenüber - ebenfalls für einen Vordergrund-Reflexionslichttaster - den der Erfindung zugrundeliegenden Lösungsansatz: Hier ist der untere Differenzschwellenwert $V_0$' auf den Wert 0 gesetzt. Dies hat zur Folge, daß sowohl für das schwarze Objekt S und das weiße Objekt W das Differenzsignal $V_{diff}$ den unteren Differenzschwellenwert $V_0$' in demselben Punkt schneidet, so daß letztlich für jedes Reflexionsvermögen derselbe Ausschaltpunkt AS bzw. AW festgelegt ist.

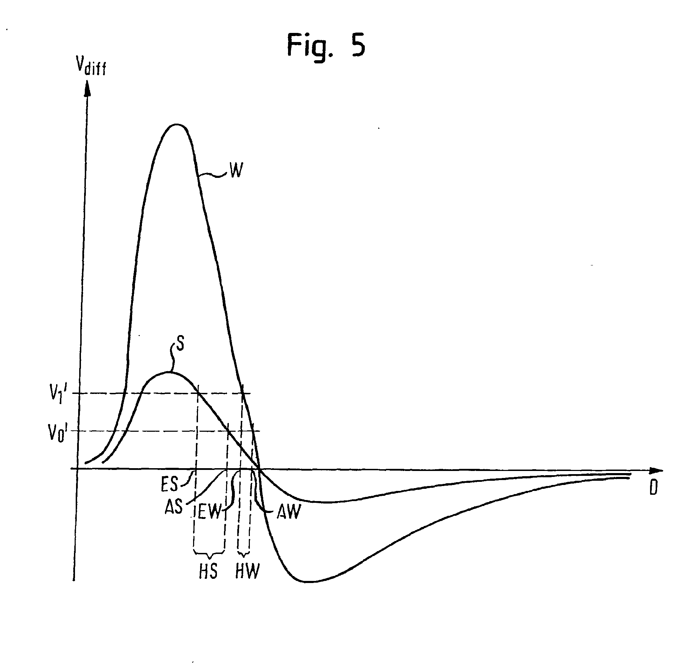

Zwar ergibt sich auch hier aufgrund der unterschiedlichen Steigungen des Differenzsignals $V_{diff}$ eine unterschiedliche Länge der jeweiligen Weghysterese HS bzw. HW. Jedoch überschneiden sich diese Weghysteresen HS und HW, so daß hierdurch - bezüglich der Lage der Differenzschwellenwerte $V_0$' und $V_1$' gemäß Fig. 5 - der Unterschied der Schaltabstände für unterschiedliches Reflexionsvermögen deutlich verringert ist.

Wie bereits erläutert, scheidet die in Fig. 1 gezeigte Festlegung der Differenzschwellenwerte $V_0$' und $V_1$' für bekannte Sensoren jedoch deswegen aus, weil bei einem unteren Differenzschwellenwert $V_0$' von Null bereits keine Unterscheidung von demjenigen Zustand mehr möglich ist, in dem sich kein Objekt mehr im Blickfeld des Sensors befindet. Beispielsweise könnte das Objekt dem Vordergrundbereich seitlich entnommen werden, ohne daß dies hinreichend zuverlässig zu einem negativen Gegenstandsfeststellungssignal führen würde.

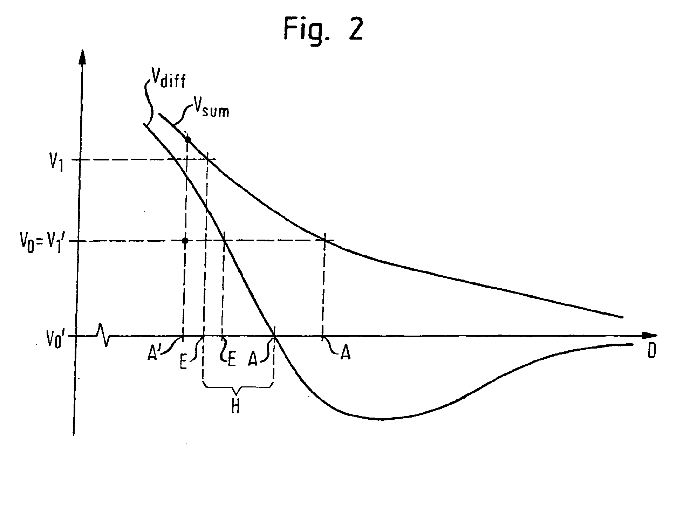

Fig. 2 zeigt, wie eine derartige mögliche Fehldetektion bei der Erfindung vermieden werden kann. Gezeigt ist ein Teil des Differenzsignals $V_{diff}$ sowie das zugehörige Summensignal $V_{sum}$, also die Summe der beiden Empfangssignale des Empfängers, jeweils in Abhängigkeit vom Tastabstand D.

Für einen Vergleich des Differenzsignals $V_{diff}$ sind wiederum ein unterer und ein oberer Differenzschwellenwert $V_0$' bzw. $V_1$' vorgesehen. Außerdem sind ein unterer und ein oberer Summenschwellenwert $V_0$ bzw. $V_1$ dargestellt, die jeweils für einen Vergleich mit dem Summensignal $V_{sum}$ herangezogen werden. In dem dargestellten Beispiel fallen der obere Differenzschwellenwert $V_1$' und der untere Summenschwellenwert $V_0$ zusammen.

Für das Beispiel eines Vordergrundtasters wird der Erzeugung eines negativen Gegenstandsfeststellungssignals die Bedingung zugrundegelegt, daß entweder das Differenzsignal $V_{diff}$ geringer ist als der untere Differenzschwellenwert $V_0$' oder das Summensignal $V_{sum}$ geringer ist als der untere Summenschwellenwert $V_0$:

$$V_{diff} < V_0' \text{ oder } V_{sum} < V_0$$

Dagegen erfolgt die Erzeugung eines positiven Gegenstandsfeststellungssignals unter der Bedingung, daß das Differenzsignal größer ist als der obere Differenzschwellenwert $V_1$' und gleichzeitig das Summensignal größer ist als der obere Summenschwellenwert $V_1$:

$$V_{diff} > V_1' \text{ und } V_{sum} > V_1$$

Die letztgenannte Bedingung ist die logische Invertierung der erstgenannten Bedingung, so daß die beiden Bedingungen sich auf einfache Weise durch eine komplementäre Schaltlogik implementieren lassen.

Aus den beiden genannten Schaltbedingungen ergibt sich die in Fig. 2 dargestellte Weghysterese H. Für diese Weghysterese H gilt der im Zusammenhang mit Fig. 1 erläuterte Vorteil, nämlich daß für Objekte unterschiedlichen Reflexionsvermögens der Ausschaltpunkt A sich nicht verschiebt und die jeweiligen Weghysteresen H deshalb stets überlappen.

Gegenüber einer bloßen Berücksichtigung des Differenzsignals $V_{diff}$ bietet die Berücksichtigung der vorgenannten Bedingungen, insbesondere die zusätzliche Berücksichtigung der Summenschwellenwerte $V_0$ und $V_1$, den Vorteil, daß stets ein eindeutiges und zuverlässiges Ausschalten des Sensors gewährleistet ist, obwohl der untere Differenzschwellenwert $V_1$' den Wert 0 hat und somit innerhalb des RMS-Rauschens des Differenzsignals $V_{diff}$ für einen objektfreien Erfassungsbereich liegt. Das Umschalten auf ein negatives Gegenstandsfeststellungssignal ist nämlich zusätzlich durch die Berücksichtigung des unteren Summenschwellenwerts $V_0$ gewährleistet.

Beispielsweise ist aus Fig. 2 auch der Fall ersichtlich, daß - nach der Erzeugung eines positiven Gegenstandsfeststellungssignals - das betreffende Objekt nicht entlang der Blickrichtung des Sensors aus dem Vordergrundbereich gelangt (zunehmender Tastabstand D), sondern diesen statt dessen bei gleichem Tastabstand D seitlich verläßt: Wie für den Ausschaltpunkt A' eingezeichnet, wird in diesem Fall der untere Summenschwellenwert Vo unterschritten, so daß hierdurch das negative Gegenstandsfeststellungssignal ausgelöst wird.

Zu den beiden vorgenannten Schaltbedingungen ist noch anzumerken, daß nicht unbedingt für jede Schaltrichtung sowohl ein Differenzvergleich als auch ein Summenvergleich durchgeführt werden müssen. Insbesondere kann es für die Erzeugung eines positiven Gegenstandsfeststellungssignals als Bedingung genügen, daß das Differenzsignal $V_{diff}$ größer ist als der obere Differenzschwellenwert $V_1$'.

Ferner ist zu bemerken, daß für die Anwendung des Sensors als Hintergrundtaster mit Vordergrundausblendung lediglich das Vorzeichen des Differenzsignals zu invertieren ist, während die weitere Verarbeitung gleich bleiben kann. Beispielsweise kann dann für die Erzeugung eines positiven Gegenstandsfeststellungssignals geprüft werden, ob das umgekehrte Differenzsignal $-V_{diff}$ größer ist als der obere Differenzschwellenwert $V_1'$ und das Summensignal $V_{sum}$ größer ist als der obere Summenschwellenwert $V_1$. Für ein negatives Gegenstandsfeststellungssignal gilt dementsprechend die logische Umkehrung dieser Bedingung.

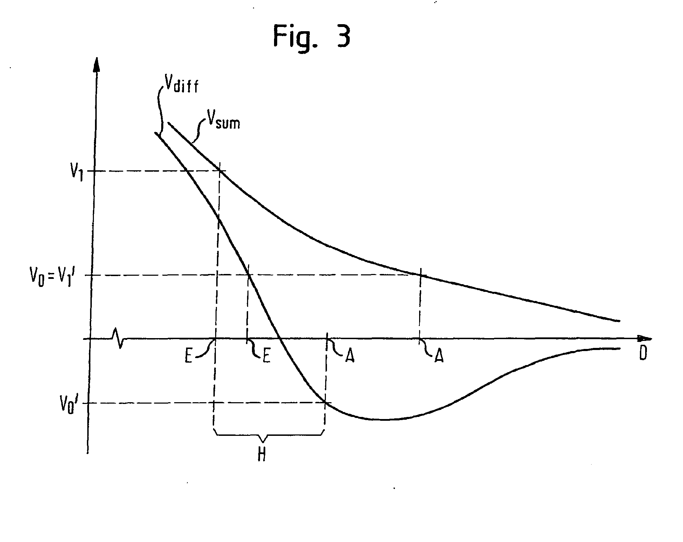

Fig. 3 zeigt ein weiteres Beispiel der Anordnung der Schwellenwerte eines Vordergrundtasters, die im wesentlichen dem Beispiel gemäß Fig. 2 entspricht. Allerdings hat hier der untere Differenzschwellenwert $V_0'$ einen negativen Wert, und der obere Differenzschwellenwert $V_1'$ - und mit diesem der untere Summenschwellenwert Vo - ist bezüglich des Wertes Null symmetrisch hierzu festgelegt.

Unter Zugrundelegung derselben Ein- und Ausschaltbedingung ergibt sich die in Fig. 3 eingezeichnete Weghysterese H. Für die Differenzsignale $V_{diff}$ von Objekten unterschiedlichen Reflexionsvermögens ändern sich nun jedoch sowohl der relevante Einschaltpunkt E als auch der relevante Ausschaltpunkt A. Allerdings erfolgt diese Änderung der Weghysterese H im wesentlichen symmetrisch um den Nulldurchgang des Differenzsignals $V_{diff}$ herum, wobei die Weghysterese H für Objekte eines größeren Reflexionsvermögens stets geringer ist als die Weghysterese H für dunklere Objekte.

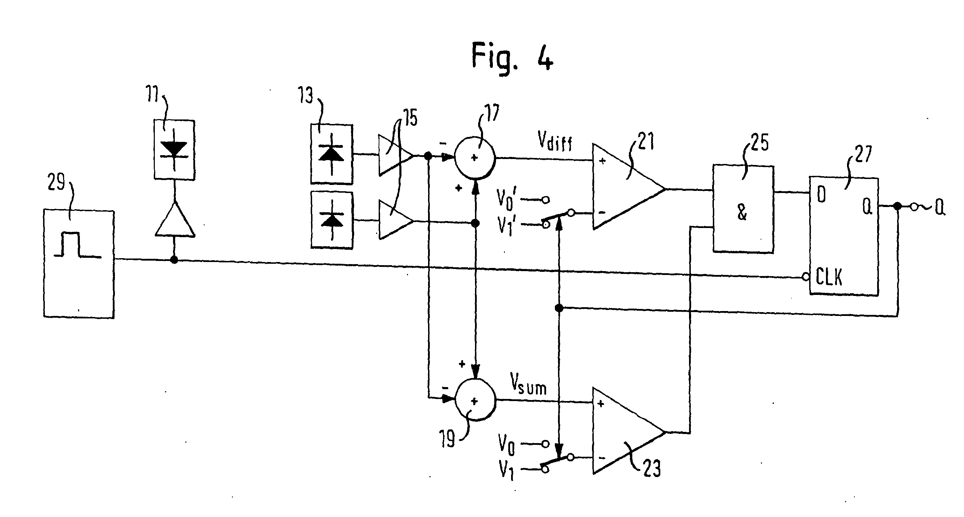

Fig. 4 zeigt schematisch einen möglichen Aufbau des erfindungsgemäßen Sensors.

Dieser Sensor besitzt einen Sender 11 und einen Empfänger 13, der mit dem Sender 11 eine Triangulationsanordnung bildet und zwei Empfangselemente aufweist. Beispielsweise kann es sich bei dem Empfänger 13 um eine Differenzdiode handeln, die ein Nah-Empfangssignal und ein Fern-Empfangssignal abgibt.

Die beiden Empfangssignale werden über einen jeweiligen Verstärker 15 an eine Differenzstufe 17 sowie an einen Summierer 19 weitergeleitet. Das Ausgangssignal der Differenzstufe 17 liegt an dem positiven Eingang einer Vergleichseinrichtung, nämlich eines Komparators 21 an, dessen negativem Eingang wahlweise der untere Differenzschwellenwert $V_0'$ oder der obere Differenzschwellenwert $V_1'$ zugeführt wird. In entsprechender Weise werden das Ausgangssignal des Summierers 19 sowie wahlweise der untere Summenschwellenwert $V_0$ und der obere Summenschwellenwert $V_1$ den beiden Eingängen eines weiteren Komparators 23 zugeführt.

Die Ausgangssignale der beiden Komparatoren 21, 23 werden durch ein UND-Gatter 25 logisch verknüpft. Das UND-Gatter 25 leitet das Ergebnis dieser Verknüpfung an den Schalteingang eines Flip-Flops 27 weiter. Am Schaltausgang des Flip-Flops 27 wird das Gegenstandsfeststellungssignal Q erzeugt, das gleichzeitig zum Umschalten zwischen dem unteren und oberen Differenzschwellenwert $V_0'$ bzw. $V_1'$ und dem unteren und oberen Summenschwellenwert Vo bzw. $V_1$ dient.

Ein Taktgeber 29 speist den Sender 11 sowie das Flip-Flop 27 mit einem Rechteckimpuls.

Der Taktgeber 29 veranlaßt den Sender 11 zur Abgabe gepulster Sendelichtsignale. Das von einem im Erfassungsbereich des Sensors befindlichen Objekt reflektierte Licht führt seitens des Empfängers 13 zur Erzeugung der beiden Empfangssignale, die in das Differenzsignal $V_{diff}$ und das Summensignal $V_{sum}$ umgewandelt werden.

Dargestellt in Fig. 4 ist für einen Vordergrundtaster der Zustand eines negativen Gegenstandsfeststellungssignals, das heißt mittels der Komparatoren 21 und 23 sowie des UND-Gatters 25 wird überprüft, ob das Differenzsignal $V_{diff}$ größer ist als der obere Differenzschwellenwert $V_1'$ und das Summensignal $V_{sum}$ größer ist als der obere Summenschwellenwert $V_1$.

Sobald diese Bedingung erfüllt ist, schaltet das ebenfalls vom Taktgeber 29 getaktete Flipflop 27 auf ein positives Gegenstandsfeststellungssignal Q um, und gleichzeitig werden die an den Komparatoren 21, 23 anliegenden Schwellenwerte zu ihrem jeweils unteren Vorgabewert $V_0'$ bzw. $V_0$ umgeschaltet. Ab diesem Zeitpunkt prüft der Sensor also im Takt des Taktgebers 29, ob entweder das Differenzsignal $V_{diff}$ kleiner ist als der untere Differenzschwellenwert $V_0'$ oder das Summensignal $V_{sum}$ kleiner ist als der untere Summenschwellenwert Vo. Ein neuerliches Umschalten kann somit erst erfolgen, wenn die Intensität und die Verteilung des den Empfänger 13 beaufschlagenden Lichts und somit das Differenzsignal $V_{diff}$ und das Summensignal $V_{sum}$ sich hinreichend ändern.

Der Schaltaufbau des Sensors gemäß Fig. 4 ist insbesondere deswegen vorteilhaft einfach, weil die Schalthysterese mittels des zuletzt jeweils festgestellten Gegenstandsfeststellungssignals Q gesteuert wird.

Der Sensor gemäß Fig. 4 kann auch dergestalt weitergebildet sein, daß ein Umschalten des Gegenstandsfeststellungssignals Q nur dann erfolgt, wenn die hierfür vorgesehene Schaltbedingung während mehrerer aufeinanderfolgenden Takte des Taktgebers 29 erfüllt ist. Zu diesem Zweck können mehrere von dem Taktgeber 29 getaktete Flipflops vorgesehen sein, wobei der Schaltausgang eines vorgeschalteten Flipflops an dem Schalteingang des jeweils nachgeschalteten Flipflops anliegt. Durch eine derartige Ausgestaltung können beispielsweise durch Fremdblitzlicht verursachte Fehlschaltungen vermieden werden.

Schließlich ist zu dem Sensor gemäß Fig. 4 anzumerken, daß auch Maßnahmen vorgesehen sein können, um den Schaltabstand einstellen zu können. Beispielsweise kann durch eine verstellbare Empfängerlinse oder einen Spiegel die Position des Lichtflecks auf dem Empfänger 13 eingestellt werden, um denjenigen Abstand vorzugeben, bei dem das Differenzsignal $V_{diff}$ den Wert Null annimmt.

Bezugszeichenliste

| | |
|---|---|
| 11 | Sender |
| 13 | Empfänger |
| 15 | Verstärker |
| 17 | Differenzstufe |
| 19 | Summierer |
| 21 | Komparator |
| 23 | Komparator |
| 25 | UND-Gatter |
| 27 | Flip-Flop |
| 29 | Taktgeber |
| D | Tastabstand |
| E, ES, EW | Einschaltpunkt |
| A, AS, AW, A' | Ausschaltpunkt |
| H, HS, HW | Weghysterese |
| Q | Gegenstandsfeststellungssignal |
| S | schwarzes Objekt |
| W | weißes Objekt |
| $V_{diff}$ | Differenzsignal |
| $V_{sum}$ | Summensignal |
| $V_0'$ | unterer Differenzschwellenwert |
| $V_1'$ | oberer Differenzschwellenwert |
| $V_0$ | unterer Summenschwellenwert |
| $V_1$ | oberer Summenschwellenwert |

**Patentansprüche**

1. Optoelektronischer Sensor, insbesondere Reflexionslichttaster, zumindest mit

    - einem Sender (11) zum Aussenden von Sendelicht,
    - einem Empfänger (13) zur Ausgabe von wenigstens zwei Empfangssignalen in Abhängigkeit von reflektiertem und empfangenem Sendelicht, wobei der Sender (11) und der Empfänger (13) eine Triangulationsanordnung bilden, und
    - einer Auswerteeinrichtung, durch die zur Feststellung, ob sich ein Objekt oder kein Objekt in einem Erfassungsbereich des Sensors befindet, eine Differenz ($V_{diff}$) der Empfangssignale mit einem Schwellenwert ($V_0'$, $V_1'$) vergleichbar ist und in Abhängigkeit von dem Ergebnis dieses Vergleichs ein positives oder negatives Gegenstandsfeststellungssignal (Q) erzeugbar ist,

    wobei zur Erzeugung einer Schalthysterese (H) mehrere verschiedene Schwellenwerte ($V_0'$, $V_1'$; $V_0$, $V_1$) vorgesehen sind, und
    wobei die Auswerteeinrichtung dergestalt ausgebildet ist, daß als zusätzliches Kriterium für die Erzeugung des Gegenstandsfeststellungssignals (Q) das Ergebnis eines Vergleichs einer Summe ($V_{sum}$) der

Empfangssignale mit einem Schwellenwert ($V_0$, $V_1$) vorgesehen ist,

**dadurch gekennzeichnet,**

**daß** für einen Vergleich der Differenz ($V_{diff}$) und/oder der Summe ($V_{sum}$) mit einem Schwellenwert jeweils ein einziger der mehreren Schwellenwerte ($V_0'$ oder $V_1'$ bzw. $V_0$ oder $V_1$) in Abhängigkeit von dem aktuellen Gegenstandsfeststellungssignal (Q) auswählbar ist,
wobei das Gegenstandsfeststellungssignal (Q) zum Umschalten zwischen den mehreren Schwellenwerten ($V_0'$ und $V_1'$ bzw. Vo und $V_1$) dient.

2. Sensor nach Anspruch 1,
**dadurch gekennzeichnet,**
**daß** zur Erzeugung der Schalthysterese (H) wenigstens zwei Schwellenwerte ($V_0'$, $V_1'$) für den Differenzvergleich (Differenzschwellenwerte) und wenigstens zwei Schwellenwerte ($V_0$, $V_1$) für den Summenvergleich (Summenschwellenwerte) vorgesehen sind.

3. Sensor nach Anspruch 1,
**dadurch gekennzeichnet,**
**daß** zur Erzeugung der Schalthysterese (H) wenigstens zwei Differenzschwellenwerte und ein einziger Summenschwellenwert vorgesehen sind.

4. Sensor nach Anspruch 1,
**dadurch gekennzeichnet,**
**daß** zur Erzeugung der Schalthysterese (H) ein einziger Differenzschwellenwert und wenigstens zwei Summenschwellenwerte vorgesehen sind.

5. Sensor nach einem der vorangehenden Ansprüche,
**dadurch gekennzeichnet,**
**daß** die Auswerteeinrichtung wenigstens eine Vergleichseinrichtung (21, 23) aufweist, durch die die Differenz ($V_{diff}$) und/oder die Summe ($V_{sum}$) der Empfangssignale wahlweise mit einem der mehreren Schwellenwerte ($V_0'$ oder $V_1'$ bzw. $V_0$ oder $V_1$) vergleichbar ist, und daß die Auswerteeinrichtung ferner ein Flip-Flop (27) aufweist, das an einem Schalteingang mit der Vergleichseinrichtung (21, 23) verbunden ist und einen Schaltausgang zur Erzeugung des Gegenstandsfeststellungssignals (Q) aufweist, wobei das Gegenstandsfeststellungssignal (Q) gleichzeitig zum Umschalten zwischen den mehreren Schwellenwerten ($V_0'$ und $V_1'$ bzw. $V_0$ und $V_1$) für den Vergleich durch die Vergleichseinrichtung (21, 23) dient.

6. Sensor nach einem der vorangehenden Ansprüche,
**dadurch gekennzeichnet,**
**daß** als Bedingung für die Erzeugung eines negativen - oder eines positiven - Gegenstandsfeststellungssignals (Q) vorgesehen ist, daß

- entweder die Differenz ($V_{diff}$) der Empfangssignale geringer ist als ein Differenzschwellenwert, insbesondere als ein unterer Differenzschwellenwert ($V_0$'), oder
- die Summe ($V_{sum}$) der Empfangssignale geringer ist als ein Summenschwellenwert, insbesondere als ein unterer Summenschwellenwert.

7. Sensor nach einem der vorangehenden Ansprüche, **dadurch gekennzeichnet,** **daß** als Bedingung für die Erzeugung eines positiven - bzw. eines negativen - Gegenstandsfeststellungssignals (Q) vorgesehen ist, daß

- die Differenz ($V_{diff}$) der Empfangssignale größer ist als ein Differenzschwellenwert, insbesondere als ein oberer Differenzschwellenwert ($V_1$'), und
- die Summe ($V_{sum}$) der Empfangssignale größer ist als ein Summenschwellenwert, insbesondere als ein oberer Summenschwellenwert ($V_1$).

8. Sensor nach einem der Ansprüche 1 bis 6, **dadurch gekennzeichnet,** **daß** als Bedingung für die Erzeugung eines positiven - bzw. eines negativen - Gegenstandsfeststellungssignals (Q) vorgesehen ist, daß die Differenz ($V_{diff}$) der Empfangssignale größer ist als ein Differenzschwellenwert, insbesondere als ein oberer Differenzschwellenwert ($V_1$').

9. Sensor nach einem der vorangehenden Ansprüche, **dadurch gekennzeichnet,** **daß** ein Differenzschwellenwert ($V_0$') Null oder im wesentlichen Null ist oder nahe des Wertes Null liegt.

10. Sensor nach einem der vorangehenden Ansprüche, **dadurch gekennzeichnet,** **daß** zwei Differenzschwellenwerte ($V_0$', $V_1$') unterschiedliche Vorzeichen besitzen.

11. Sensor nach einem der vorangehenden Ansprüche, **dadurch gekennzeichnet,** **daß** ein oberer Differenzschwellenwert ($V_1$') und ein unterer Differenzschwellenwert ($V_0$') im wesentlichen symmetrisch um den Wert Null angeordnet sind.

12. Sensor nach einem der vorangehenden Ansprüche, **dadurch gekennzeichnet,** **daß** ein oberer Differenzschwellenwert ($V_1$') einem unteren Summenschwellenwert ($V_0$) entspricht.

13. Sensor nach einem der vorangehenden Ansprüche, **dadurch gekennzeichnet,** **daß** der Empfänger (13) zur Erzeugung der wenigstens zwei Empfangssignale mehrere Empfangsabschnitte oder Empfangselemente aufweist.

14. Sensor nach einem der vorangehenden Ansprüche, **dadurch gekennzeichnet,** **daß** es sich bei den wenigstens zwei Empfangssignalen um ein Nah-Empfangssignal und ein Fern-Empfangssignal handelt.

15. Sensor nach einem der vorangehenden Ansprüche, **dadurch gekennzeichnet,** **daß** der Sensor als Vordergrund-Taster oder als Hintergrund-Taster ausgebildet ist.

16. Sensor nach einem der vorangehenden Ansprüche, **dadurch gekennzeichnet,** **daß** ein Taktgeber (29) vorgesehen ist, durch den der Sender (11) zum Aussenden von gepulstem Sendelicht ansteuerbar ist, wobei die Auswerteeinrichtung dergestalt ausgebildet ist, daß ein positives oder negatives Gegenstandsfeststellungssignal (Q) nur dann erzeugbar ist, wenn die jeweilige Bedingung während mehrerer aufeinanderfolgender Takte des Taktgebers (29) erfüllt ist.

17. Verfahren zur Erzeugung eines positiven oder negativen Gegenstandsfeststellungssignals (Q) in Abhängigkeit von dem Vorhandensein bzw. Nichtvorhandensein eines Objekts in einem Erfassungsbereich eines optoelektronischen Sensors, insbesondere gemäß der Funktionsweise eines Sensors nach einem der vorhergehenden Ansprüche, wobei

- mittels eines Senders (11) Sendelicht in Richtung des Erfassungsbereichs ausgesendet wird,
- mittels eines Empfängers (13) in Abhängigkeit von reflektiertem und empfangenem Sendelicht wenigstens zwei Empfangssignale erzeugt werden, wobei der Sender (11) und der Empfänger (13) eine Triangulationsanordnung bilden, und
- zur Erzeugung des positiven oder negativen Gegenstandsfeststellungssignals (Q) eine Differenz ($V_{diff}$) der Empfangssignale mit einem Schwellenwert ($V_0$', $V_1$') verglichen wird,

wobei zur Erzeugung einer Schalthysterese (H) mehrere verschiedene Schwellenwerte ($V_0$', $V_1$'; $V_0$, $V_1$) berücksichtigt werden, und wobei als zusätzliches Kriterium für die Erzeugung des Gegenstandsfeststellungssignals (Q) eine Summe ($V_{sum}$) der Empfangssignale mit einem Schwellenwert ($V_0$, $V_1$) verglichen wird, **dadurch gekennzeichnet,** **daß** für einen Vergleich der Differenz ($V_{diff}$) und/oder der Summe ($V_{sum}$) mit einem Schwellenwert jeweils ein einziger der mehreren Schwellenwerte ($V_0$' oder $V_1$' bzw. $V_0$ oder $V_1$) in Abhängigkeit von dem aktuellen Gegenstandsfeststellungssignal (Q) ausgewählt wird,

wobei das Gegenstandsfeststellungssignal (Q) zum Umschalten zwischen den mehreren Schwellenwerten ($V_0$' und $V_1$' bzw. $V_0$ und $V_1$) dient.

## Claims

1. An optoelectronic sensor, in particular a reflection light scanner, at least comprising

   - a transmitter (11) for transmitting transmitted light;
   - a receiver (13) for outputting at least two received signals in dependence on reflected and received transmitted light, wherein the transmitter (11) and the receiver (13) form a triangulation arrangement; and
   - an evaluation device by which, for determining whether an object or no object is disposed in a detection zone of the sensor, a difference ($V_{diff}$) of the received signals can be compared with a threshold ($V_0$', $V_1$') and a positive or negative article detection signal (Q) can be produced in dependence on the result of this comparison,

   wherein a plurality of different thresholds ($V_0$', $V_1$'; $V_0$, $V_1$) is provided to produce a switching hysteresis (H); and
   wherein the evaluation device is made such that the result of a comparison of a sum ($V_{sum}$) of the received signals with a threshold ($V_0$, $V_1$) is provided as an additional criterion for the production of the article detection signal (Q),
   **characterized in that**, for a comparison of the difference ($V_{diff}$) and/or of the sum ($V_{sum}$) with a threshold, in each case a single one of the plurality of thresholds ($V_0$' or $V_1$' and/or $V_0$ or $V_1$) can be selected in dependence on the actual article detection signal (Q), wherein the article detection signal (Q) serves for the switching between the plurality of thresholds ($V_0$' and $V_1$' and/or $V_0$ and $V_1$).

2. A sensor in accordance with claim 1, **characterized in that** at least two thresholds ($V_0$', $V_1$') are provided for the difference comparison (difference thresholds) and at least two thresholds ($V_0$, $V_1$) are provided for the sum comparison (sum thresholds) for the production of the switching hysteresis (H).

3. A sensor in accordance with claim 1, **characterized in that** at least two difference thresholds and a single sum threshold are provided for the production of the switching hysteresis (H).

4. A sensor in accordance with claim 1, **characterized in that** a single difference threshold and at least two sum thresholds are provided for the production of the switching hysteresis (H).

5. A sensor in accordance with any one of the preceding claims, **characterized in that** the evaluation device has at least one comparison device (21, 23) by which the difference ($V_{diff}$) and/or the sum ($V_{sum}$) of the received siganls can selectively be compared with one of the plurality of thresholds ($V_0$' or $V_1$' and/or $V_0$ or $V_1$); and **in that** the evaluation device further has a flip-flop (27) which is connected to the comparison device (21, 23) at a switch input and has a switch output for the production of the article detection signal (Q), with the article detection signal (Q) simultaneously serving for the switching between the plurality of thresholds ($V_0$' and $V_1$' and/or $V_0$ and $V_1$) for the comparison by the comparison device (21, 23).

6. A sensor in accordance with any one of the preceding claims, **characterized in that** provision is made as a condition for the production of a negative - or of a positive - article detection signal (Q) that

   - either the difference ($V_{diff}$) of the received signals is lower than a difference threshold, in particular lower than a lower difference threshold ($V_0$'); or
   - the sum ($V_{sum}$) of the received signals is lower than a sum threshold, in particular lower than a lower sum threshold.

7. A sensor in accordance with any one of the preceding claims, **characterized in that** provision is made as the condition for the production of a positive - or of a negative - article detection signal (Q) that

   - the difference ($V_{diff}$) of the received signals is larger than a difference threshold, in particular larger than an upper threshold ($V_1$'); and
   - the sum ($V_{sum}$) of the received signals is larger than a sum threshold, in particular larger than an upper sum threshold ($V_1$).

8. A sensor in accordance with any one of claims 1 to 6, **characterized in that** provision is made as the condition for the production of a positive - or of a negative - article detection signal (Q) that the difference ($V_{diff}$) of the received signals is larger than a difference threshold, in particular larger than an upper difference threshold ($V_1$').

9. A sensor in accordance with any one of the preceding claims, **characterized in that** one difference threshold ($V_0$') is zero or is substantially zero or lies near to the value zero.

10. A sensor in accordance with any one of the preceding claims, **characterized in that** two difference thresholds ($V_0$', $V_1$') have different signs.

11. A sensor in accordance with any one of the preceding claims, **characterized in that** an upper threshold ($V_1$') and a lower threshold ($V_0$') are arranged substantially symmetrically around the value zero.

12. A sensor in accordance with any one of the preceding claims, **characterized in that** an upper difference threshold ($V_1$') corresponds to a lower sum threshold ($V_0$).

13. A sensor in accordance with any one of the preceding claims, **characterized in that** the receiver (13) has a plurality of reception sections or reception elements to produce the at least two received signals.

14. A sensor in accordance with any one of the preceding claims, **characterized in that** the at least two received signals are a near received signal and a far received signal.

15. A sensor in accordance with any one of the preceding claims, **characterized in that** the sensor is made as a foreground scanner or as a background scanner.

16. A sensor in accordance with any one of the preceding claims, **characterized in that** a clock (29) is provided by which the transmitter (11) can be selected to transmit pulsed transmitted light, wherein the evaluation device is made such that a positive or a negative article detection signal (Q) can only be produced when the respective condition is satisfied during a plurality of successive cycles of the clock (29).

17. A method for producing a positive or a negative article detection signal (Q) in dependence on the presence or absence of an object in a detection zone of an optoelectronic sensor, in particular according to the functioning of a sensor in accordance with any one of the preceding claims, wherein

    - transmitted light is transmitted in the direction of the detection zone by means of a transmitter (11);
    - at least two received signals are produced by means of a receiver (13) in dependence on reflected and received transmitted light, wherein the transmitter (11) and the receiver (13) form a triangulation arrangement; and
    - a difference ($V_{diff}$) in the received signals is compared with a threshold ($V_0$', $V_1$') to produce the positive or negative article detection signal (Q);

wherein a plurality of different thresholds ($V_0$', $V_1$';

$V_0$, $V_1$) is taken into account to produce a switching hysteresis (H), and a sum ($V_{sum}$) of the received signals is compared with a threshold ($V_0$, $V_1$) as an additional criterion for the production of the article detection signal (Q),

**characterized in that**, for a comparison of the difference ($V_{diff}$) and/or of the sum ($V_{sum}$) with a threshold, in each case a single one of the plurality of thresholds ($V_0$' or $V_1$' and/or $V_0$ or $V_1$) can be selected in dependence on the actual article detection siganl (Q), wherein the article detection signal (Q) serves for the switching between the plurality of thresholds ($V_0$' and $V_1$' and/or $V_0$ and $V_1$).

## Revendications

1. Détecteur optoélectronique, en particulier capteur de lumière réfléchie, comprenant au moins :

    -- un émetteur (11) pour émettre une lumière émise,
    -- un récepteur (13) pour délivrer au moins deux signaux reçus en fonction de la lumière émise réfléchie et reçue, l'émetteur (11) et le récepteur (13) formant un agencement de triangulation, et
    -- une unité d'évaluation au moyen de laquelle, pour constater si un objet ou aucun objet se trouve dans une zone de détection du détecteur, une différence ($V_{diff}$) des signaux reçus peut être comparée avec une valeur seuil ($V_0$', $V_1$') et, en fonction du résultat de cette comparaison, un signal de constatation d'objet (Q) positif ou négatif peut être généré,

    dans lequel pour générer une hystérésis de commutation (H) sont prévues plusieurs valeurs seuils ($V_0$', $V_1$' ; $V_0$, $V_1$) différentes, et l'unité d'évaluation est réalisée de telle manière que, pour la génération d'un signal de constatation d'objet (Q) il est prévu à titre de critère additionnel d'utiliser le résultat d'une comparaison entre une somme ($V_{somme}$) des signaux reçus et une valeur seuil ($V_0$, $V_1$),
    **caractérisé en ce que** :

    pour une comparaison de la différence ($V_{diff}$) et/ou de la somme ($V_{somme}$) avec une valeur seuil il est possible de sélectionner respectivement une unique valeur seuil parmi les plusieurs valeurs seuils ($V_0$' ou $V_1$', respectivement $V_0$ ou $V_1$) en fonction du signal actuel de constatation d'objet (Q), et ledit signal de constatation d'objet (Q) sert à la commutation entre les plusieurs valeurs seuils ($V_0$' et $V_1$', respectivement $V_0$ et $V_1$).

2. Détecteur selon la revendication 1, **caractérisé en ce que** pour générer l'hystérésis de commutation (H), il est prévu au moins deux valeurs

seuils ($V_0$', $V_1$') pour la comparaison de différence (valeur seuil de différence) et au moins deux valeurs seuils ($V_0$, $V_1$) pour la comparaison de somme (valeur de seuil de somme).

3. Détecteur selon la revendication 1, **caractérisé en ce que** pour générer l'hystérésis de commutation (H), il est prévu au moins deux valeurs seuils de différence et une unique valeur seuil de somme.

4. Détecteur selon la revendication 1, **caractérisé en ce que** pour générer l'hystérésis de commutation (H), il est prévu une unique valeur seuil de différence et au moins deux valeurs seuils de somme.

5. Détecteur selon l'une des revendications précédentes, **caractérisé en ce que** l'unité d'évaluation comprend au moins une unité de comparaison (21, 23) au moyen de laquelle la différence ($V_{diff}$) et/ou la somme ($V_{somme}$) des signaux reçus peut être comparée au choix avec l'une des plusieurs valeurs seuils ($V_0$' ou $V_1$', respectivement $V_0$ ou $V_1$), et **en ce que** l'unité d'évaluation comprend en outre une bascule bistable (flip-flop 27) qui est raccordée à une entrée de commutation d'un dispositif de comparaison (21, 23) et qui comporte une sortie de commutation pour générer le signal de constatation d'objet (Q), ledit signal de constatation d'objet (Q) servant simultanément à la commutation entre les plusieurs valeurs seuils ($V_0$' et $V_1$', respectivement $V_0$ et $V_1$) pour la comparaison par l'unité de comparaison (21, 23).

6. Détecteur selon l'une des revendications précédentes, **caractérisé en ce que**, à titre de condition pour la génération d'un signal de constatation d'objet (Q) négatif ou positif, on prévoit :

    -- soit que la différence ($V_{diff}$) des signaux reçus soit inférieure à une valeur seuil de différence, en particulier à une valeur de seuil de différence inférieure ($V_0$'),
    -- soit que la somme ($V_{somme}$) des signaux reçus soit inférieure à une valeur seuil de somme, en particulier une valeur seuil de somme inférieure.

7. Détecteur selon l'une des revendications précédentes, **caractérisé en ce que**, à titre de condition de pour la génération d'un signal de constatation d'objet (Q) positif ou négatif, on prévoit :

    -- soit que la différence ($V_{diff}$) des signaux reçus soit supérieure à une valeur seuil de différence, en particulier à une valeur seuil de différence supérieure ($V_1$'),
    -- soit que la somme ($V_{somme}$) des signaux reçus soit supérieure à une valeur seuil de somme, en particulier à une valeur seuil de somme supérieure ($V_1$).

8. Détecteur selon l'une des revendications 1 à 6, **caractérisé en ce que**, à titre de condition pour la génération d'un signal de constatation d'objet (Q) positif ou négatif, on prévoit que la différence ($V_{diff}$) des signaux reçus soit supérieure à une valeur de seuil de différence, en particulier à une valeur de seuil de différence supérieure ($V_1$').

9. Détecteur selon l'une des revendications précédentes, **caractérisé en ce qu'**une valeur seuil de différence ($V_0$') est nulle ou sensiblement nulle, ou proche de la valeur zéro.

10. Détecteur selon l'une des revendications précédentes, **caractérisé en ce que** deux valeurs seuils de différence ($V_0$', $V_1$') possèdent des signes différents.

11. Détecteur selon l'une des revendications précédentes, **caractérisé en ce qu'**une valeur seuil de différence supérieure ($V_1$') et une valeur seuil de différence inférieure ($V_0$') sont agencées sensiblement symétriquement autour de la valeur zéro.

12. Détecteur selon l'une des revendications précédentes, **caractérisé en ce qu'**une valeur seuil de différence (supérieur ($V_1$') correspond à une valeur seuil de somme inférieure.

13. Détecteur selon l'une des revendications précédentes, **caractérisé en ce que**, pour générer lesdits au moins deux signaux récepteurs, le récepteur (13) comprend plusieurs étages ou éléments récepteurs.

14. Détecteur selon l'une des revendications précédentes, **caractérisé en ce que** lesdits au moins deux signaux reçus sont un signal reçu proche et un signal reçu lointain.

15. Détecteur selon l'une des revendications précédentes, **caractérisé en ce que** le détecteur est réalisé comme capteur d'avant-plan ou comme capteur d'arrière-plan.

16. Détecteur selon l'une des revendications précédentes,

**caractérisé en ce qu'**il est prévu un générateur de cadence (29) au moyen duquel l'émetteur (11) peut être un piloté pour émettre de la lumière émise pulsée, et le dispositif d'évaluation est réalisé de telle manière qu'il est possible de générer un signal de constatation d'objet (Q) positif ou négatif uniquement si la condition respective est satisfaite pendant plusieurs cadences successives du générateur de cadence (29).

17. Procédé pour générer un signal de constatation d'objet (Q) positif ou négatif en fonction de la présence ou de la non-présence d'un objet dans une zone de détection d'un détecteur optoélectronique, en particulier selon le mode de fonctionnement d'un détecteur selon l'une des revendications précédentes, dans lequel :

> -- au moyen d'un émetteur (11), une lumière émise et émise en direction de la zone de détection,
> -- au moyen d'un récepteur (13) on génère au moins deux signaux reçus en fonction de la lumière émise réfléchie et de la lumière émise reçue, l'émetteur (11) et le récepteur (13) formant un agencement de triangulation, et
> -- pour générer le signal de constatation d'objet (Q) positif ou négatif, une différence ($V_{diff}$) des signaux reçus est comparée à une valeur seuil ($V_0'$, $V_1'$),

dans lequel pour générer une hystérésis de commutation (H), on prend en compte plusieurs valeurs seuils différentes ($V_0'$, $V_1'$ ; $V_0$, $V_1$), et pour générer le signal de constatation d'objet (Q) on utilise à titre de critère additionnel une comparaison d'une somme ($V_{somme}$) des signaux reçus avec une valeur seuil ($V_0$, $V_1$),

**caractérisé en ce que**

pour une comparaison de la différence ($V_{diff}$) et/ou de la somme ($V_{somme}$) avec une valeur seuil, on choisit respectivement une valeur seuil unique parmi les plusieurs valeurs seuils ($V_0'$ ou $V_1'$, respectivement $V_0$ ou $V_1$) en fonction du signal de constatation d'objet (Q) actuel, et le signal de constatation d'objet (Q) sert à la commutation entre les plusieurs valeurs seuils ($V_0'$ et $V_1'$, respectivement $V_0$ et $V_1$).

Fig. 1

# Fig. 2

# Fig. 3

Fig. 4

# Fig. 5